# EUROPEAN PATENT APPLICATION

(11) **EP 2 039 956 A1**
(43) Date of publication of application: **25.03.2009**
(21) Application number: 06768122.1
(22) Date of filing: 12.07.2006
(51) Int. Cl.: F16F 9/32, F15B 15/20, F16F 9/02, F16J 15/16

(54) **LUBRICATION STRUCTURE FOR GAS SPRING**

(71) Applicant: Pascal Engineering Corporation, Itami-shi Hyogo 664-8502 (JP)
(72) Inventor: KIMURA, Seiji, Itami-shi Hyogo 664-8502 (JP)
(74) Representative: Roberts, Mark Peter
(86) International application number: PCT/JP2006/313858
(87) International publication number: WO 2008/007427

(57) **Abstract**

A lubricating oil received in a portion of lower end side in a cylinder body is reliably supplied to a rod member and a sealing member to reliably lubricate a sliding part between the sealing member and the rod member by use of a pressure change of compressed gas in a gas spring with the rod member disposed in a posture of protruding it upward from a rod-side end wall of the cylinder body.

In the lubricating structure of a gas spring 1, a pair of check valves 25,26 preventing a back flow of a lubricating oil 21 from the lubricating oil outlet 23 side to the lubricating oil inlet 22 side are provided in series in a lubricating oil passage 24 connecting the lubricating oil inlet 22 and the lubricating oil outlet 23, and the lubricating oil 21 is introduced from the lubricating oil inlet 22 into the lubricating oil passage 24 and the lubricating oil 21 is discharged from the lubricating oil outlet 23 by use of a pressure change of the compressed gas 3 to supply it to the rod member 4.

## Description

### TECHNICAL FIELD

The present invention relates to a lubrication structure for a gas spring wherein a sliding part between a rod member at the rod-side end wall and a sealing member is constructed in a manner capable of lubrication with a lubricating oil received in a cylinder body in a gas spring disposed with a rod member protruding upward from the rod-side end wall of the cylinder body.

Little now, the applicant of this invention has put to practical use gas springs for various purposes, such as a main shaft balancer of machine tools and cushion devices for pressing machines, etc. Generally, this type of gas spring has a cylinder body, a compressed gas filled into the cylinder body, a rod member inserted slidably into the rod-side end wall of the cylinder body and receiving a gas pressure of compressed gas, and a sealing member sealing a sliding part between the rod-side end wall and the rod member (see Patent documents 1, 2).

If the sealing member is aged (worn), the compressed gas in the cylinder body leaks from the sliding part between the rod-side end wall and the rod member to the atmosphere and a function of the gas spring ceases, therefore the sliding part between the sealing member and the rod member should be preferably lubricated with a lubricating oil to inhibit the aging caused by friction.

Accordingly, when the gas spring is disposed in a posture of protruding the rod member downward from the rod-side end wall of the cylinder body (downward posture), the sliding part between the sealing member and the rod member can be lubricated with a proper amount of lubricating oil received it in the cylinder body because the lubricating oil of accumulating in the cylinder body with the rod-side end wall as the bottom, adheres to the rod member.

However, sometimes when the gas spring is disposed in a posture of protruding the rod member upward from the rod-side end wall of the cylinder body (upward posture)due to the installation or assembly in equipment such as a working machine tool or a pressing machine, etc.
Patent document 1: Japanese Laid-Open Patent Application 2001-105256
Patent document 2: Japanese Laid-Open Patent Application 2000-145860

### DISCLOSURE OF THE INVENTION

### PROBLEM TO BE SOLVED BY THE INVENTION

When the gas spring is disposed in the upward posture, even if a lubricating oil is received in the cylinder body, its amount cannot be increased to an extent of harming the function of gas spring and the lubricating oil only becomes a state that it accumulates in the lower end part in the cylinder body, therefore, there is such a problem that this lubricating oil can be reliably supplied to a rod member protruding upward from the rod-side end wall and a sealing member sealing a space between the rod-side end wall and the rod member, but a sliding part between the sealing member and the rod member cannot be reliably lubricated with the lubricating oil.

Although there is such a possibility that the lubricating oil received in the lower end part in the cylinder body jumps up and down due to vibration caused by operations of gas spring and adheres to the rod member, it cannot be expected always, particularly, in a gas spring with a big forward/backward stroke of the rod member, it is highly feared that the adherence position of lubricating oil is a position fairly isolated downward from the rod-side end wall and a sliding part between a sealing member and a rod member cannot be reliably lubricated with the lubricating oil even if the lubricating oil adheres to the rod member.

When such a gas spring in which a rod member protrudes to the both up and down sides from the cylinder body exists, the lubricating oil adheres reliably to the rod member in this gas spring even if it is disposed in an upward posture, but the adherence position of lubricating oil is a position fairly isolated downward from the rod-side end wall on the upper end of the cylinder body as above, therefore it is highly feared that a sliding part a sealing member at the rod-side end wall and a rod member on the upper end side cannot be reliably lubricated with the lubricating oil.

The purpose of present invention is to provide a lubrication structure for gas spring capable of reliably supplying a lubricating oil received in the lower end part of a cylinder body to a rod member and a sealing member by use of a pressure change of a compressed gas and reliably lubricating a sliding part the sealing member and the rod member in a gas spring disposed with the rod member in a posture of protruding it upward from the rod-side end wall of the cylinder body.

### MEANS TO SOLVE THE PROBLEM

A lubrication structure for gas spring of the present invention comprising a cylinder body, a compressed gas filled in the cylinder body, a rod member inserted slidably into a rod-side end wall and receiving a gas pressure of the compressed gas and a sealing member sealing a sliding part between the rod-side end wall and the rod member and disposed with the rod member in a posture of protruding it upward from the rod-side end wall; wherein said lubrication structure comprises, a lubricating oil received in a lower end part in the cylinder body, a lubricating oil inlet formed in the lower end part of the cylinder body so that the lubricating oil can be introduced, a lubricating oil outlet formed in an upper end part of the cylinder body positioning on an upper side than a vicinity of a lower end of the rod-side end wall of cylinder body so that the lubricating oil can be injected, a lubricating oil passage connecting the lubricating oil inlet and the lubricating oil outlet, and a check valve means provided in the lubricating oil passage and preventing a back flow of the lubricating oil from the lubricating oil outlet to the lubricating oil inlet, and the lubrication structure being so constructed that the lubricating oil is introduced from the lubricating oil inlet to the lubricating oil passage and the lubricating oil is injected from the lubricating oil outlet by utilizing a pressure change in the compressed gas so that it can be supplied to the rod member and the sealing member.

This lubrication structure for gas spring is applicable to gas springs for various purposes, such as main shaft balancer of machine tools and cushion device of pressing machines, etc., and is particularly suitable to gas springs with a big forward or backward stroke. The amount of lubricating oil received in the lower end part in the cylinder body is preferably such a proper amount that it needs not be made up for a long time.

A pressure change generates in the compressed gas in the cylinder body by recedence or advance of the rod member to the cylinder body, the lubricating oil in the cylinder body is introduced from the lubricating oil inlet into the lubricating oil passage and the lubricating oil in the lubricating oil passage is injected from the lubricating oil outlet and supplied to the rod member or the sealing member by utilizing this pressure change of compressed gas, thus a sliding part between the sealing member and the rod member is lubricated with the lubricating oil. A state of filling the lubricating oil into at least a part of lubricating oil passage is maintained by providing a check valve means for preventing the back flow of lubricating oil from the lubricating oil outlet side to the lubricating oil inlet side, and the lubricating oil in the lubricating oil passage can be reliably injected from the lubricating oil outlet.

A pair of check valves are preferably provided in series in the lubricating oil passage as the check valve (Claim 2). An accumulator connected to a passage between the pair of check valves in the lubricating oil passage is preferably provided (Claim 3). One of the pair of check valves is preferably provided in a portion near to the lubricating oil inlet in the lubricating oil passage, and the other of the pair of check valves is preferably provided in a portion near to the lubricating oil outlet in the lubricating oil passage (Claim 4).

On the other hand, the lubricating oil may also be introduced from the lubricating oil inlet and the lubricating oil may also discharged from the lubricating oil outlet by a differential pressure between a pressure of compressed gas near to the lubricating oil inlet and a pressure of compressed gas near to the lubricating oil outlet (Claim 5). In this case, the present invention may also be so constructed that a surge pressure generating when the rod member suddenly recedes into the cylinder body is acted on the lubricating oil to generate the differential pressure (Claim 6). In this case, an accumulator connected to the cylinder body may also be provided to relax a sudden pressure rise of the compressed gas and enlarge the differential pressure. Here, the check valve is preferably provided in a portion nearer to the lubricating oil inlet than the lubricating oil outlet in the lubricating oil passage (Claim 7).

The lubricating oil passage preferably has an inlet side port communicating with the lubricating oil inlet and facing the periphery of the cylinder body, an outlet side port communicating with the lubricating oil outlet and facing the periphery of the cylinder body and a passage forming member connecting these two ports (Claim 8). In this case, the passage forming member may also consist of an elastomer tube (Claim 9) or the entire lubricating oil passage may also be formed in the cylinder body.

The lubricating oil inlet is preferably formed on the upper surface of bottom wall of the cylinder body (Claim 10). The lubricating oil outlet may also be formed on the inner surface of wall of the cylinder body so that it faces to a portion position-ing on the downside of rod-side end wall in the rod member (Claim 11), or the lubricating oil outlet may also be formed on the inner surface of rod-side end wall so that it faces to a portion positioning in the vicinity of sealing member in the rod member (Claim 12).

### ADVANTAGES OF THE INVENTION

According to the invention of Claim 1, it is so constructed that a lubricating oil received in the lower end part in a cylinder body, a lubricating oil inlet formed in the lower end part of the cylinder body so that the lubricating oil can be introduced, a lubricating oil outlet formed in the upper end part of the cylinder body positioning on the vicinity of lower end of the rod-side end wall of cylinder body so that the lubricating oil can be discharged, a lubricating oil passage connecting the lubricating oil inlet and the lubricating oil outlet and a check valve provided in the lubricating oil passage and preventing a back flow of the lubricating oil from the lubricating oil inlet and the lubricating oil outlet are provided; the lubricating oil is introduced from the lubricating oil inlet to the lubricating oil passage and the lubricating oil is discharged from the lubricating oil outlet by use of a pressure change of the compressed gas so that the lubricating oil can be supplied to the rod member and the sealing member, and a state of filling the lubricating oil into at least a part of the lubricating oil passage by the check valve without impairing the function of gas spring by receiving a proper amount of lubricating oil in the cylinder body, therefore the lubricating oil is reliably supplied to the rod member or the sealing member and the space between the rod-side end wall and the rod member (sliding part) can be reliably supplied and hence the durability of sealing member can be enhanced and the function of gas spring can be continued for a long time; moreover, the pressure change of compressed gas can be generated by allowing the rod member to recede or advance to the cylinder body, therefore the invention is a simple construction in which a driving machine for supplying the lubricating oil needs not to be provided separately and the lubricating function can be reliably displayed if necessary.

According to an embodiment where a pair of check valves are provided in series in the lubricating oil passage as the check valve means, when the rod member recedes into the cylinder body to pressurize the compressed gas, the pressure of the compressed gas is not acted on the passage portion between the pair of check valves in the lubricating oil passage from the lubricating oil outlet side. Therefore, the lubricating oil in the cylinder body is pressurized and introduced from the lubricating oil inlet into the lubricating oil passage and the lubricating oil is kept in the pressurized state in the passage; when the rod member advances from the cylinder body to depressurize the compressed gas, the lubricating oil in the lubricating oil passage can be reliably injected from the lubricating oil outlet by the lubricating oil kept in the passage and in the pressurized state.

According to an embodiment where an accumulator connected to the passage part between the pair of check valves, when a compressed gas is pressurized, the lubricating oil in the cylinder body can be reliably introduced from the lubricating oil inlet into the lubricating oil passage and a proper amount of lubricating oil is reliably kept in a pressurized state; when a compressed gas is depressurized, a proper amount of the lubricating oil in the lubricating oil passage can be reliably injected from the lubricating oil outlet by the lubricating oil kept in the passage part and the accumulator and in the pressurized state.

According to an embodiment where one of the pair of check valves is provided in a portion near to the lubricating oil inlet in the lubricating oil passage and the other of the pair of check valves is provided in a portion near to the lubricating oil outlet in the lubricating oil passage, a state of filling the lubricating oil always in most of the lubricating oil passage can be maintained and the compressed gas can be kept in the pressurized state; when the compressed gas is depressurized, the lubricating oil in the lubricating oil passage can be reliably injected from the lubricating oil outlet.

According to an embodiment where the lubricating oil is introduced from the lubricating oil inlet and the lubricating oil is injected from the lubricating oil outlet by a differential pressure between a pressure of compressed gas near to the lubricating oil inlet and a pressure of compressed gas near to the lubricating oil outlet, the lubricating oil can be reliably supplied to the rod member or the sealing member by utilizing the differential pressure.

According to an embodiment where it is so constructed that a surge pressure generated when the rod member suddenly recedes into the cylinder body is acted on the lubricating oil to generate the differential pressure, the differential pressure can be reliably generated by utlizing an operation of gas spring in which the rod member suddenly recedes into the cylinder body.

According to an embodiment where the check valve means for preventing a back flow of the lubricating oil from the lubricating oil outlet side to the lubricating oil inlet side is provided in a portion nearer to the lubricating oil inlet than the lubrica-ting oil outlet in the lubricating oil passage, the lubricating oil can be kept in a portion on the further lubricating oil outlet side than the check valve in the lubricating oil passage even if the differential pressure does not generate, the amount of lubricating oil that is allowable in the lubricating oil passage can be increased by providing the check valve means in a portion nearer to the lubricating oil inlet than the lubricating oil outlet in the lubricating oil passage, accordingly, when the differential pressure is generated, the lubricating oil can be reliably injected from the lubricating oil outlet by introducing a small amount of the lubricating oil from the lubricating oil inlet.

According to an embodiment where the lubricating oil passage has an inlet side port communicating with the lubricating oil inlet and facing the periphery of cylinder body, an outlet side port communicating with the lubricating oil outlet and facing the periphery of cylinder body and a passage forming member connecting these two ports, the lubrication structure can be constructed with a simple structure in which the passage forming member is mounted by connecting these two ports by forming only parts of lubricating oil passage to the cylinder body, and thus the application of this lubrication structure becomes simple.

According to an embodiment where the passage forming member comprises an elastomer tube, when a pair of check valves are provided in series in the lubricating oil passage and a compressed gas is pressurized, the lubricating oil in the cylinder body is pressurized, lubricating oil can be reliably introduced from the into lubricating oil inlet to the lubricating oil passage while expanding elastomer tube, thus the lubricating oil can be reliably kept in the pressurized state in the passage part between the pair of check valves in the lubricating oil passage.

According to an embodiment where the lubricating oil inlet is formed on an upper surface of bottom wall of the cylinder body, the lubricating oil received in the lower end part in the cylinder body can be reliably introduced from the lubricating oil inlet to the lubricating oil passage.

According to an embodiment where the lubricating oil outlet is formed on an inner surface of wall of the cylinder body so that it faces to a portion positioning on a lower side of the rod-side end wall in the rod member, the lubricating oil injected from the lubricating oil outlet can be reliably supplied to the rod member in a vicinity of the sealing member and thus the sliding part between the sealing member and the rod member can be reliably lubricated with this lubricating oil.

According to an embodiment where the lubricating oil outlet is formed on the inner surface portion of rod-side end wall so that it faces to a portion positioned in a vicinity of sealing member in the rod member, the lubricating oil injected from the lubricating oil outlet can be reliably supplied to the rod member in the vicinity of the sealing member and thus the sliding part between the sealing member and the rod member can be reliably lubricated with the lubricating oil

### BRIEF DESCRIPTION OF THE DRAWING

Fig. 1 is a vertical sectional view of a gas spring of Embodiment 1.
Fig. 2 is a vertical sectional view of a gas spring of Embodiment 2.
Fig. 3 is a vertical sectional view of a gas spring of Embodiment 3.
Fig. 4 is a vertical sectional view of a gas spring of Embodiment 4.
Fig. 5 is a vertical sectional view of a gas spring of Embodiment 5.

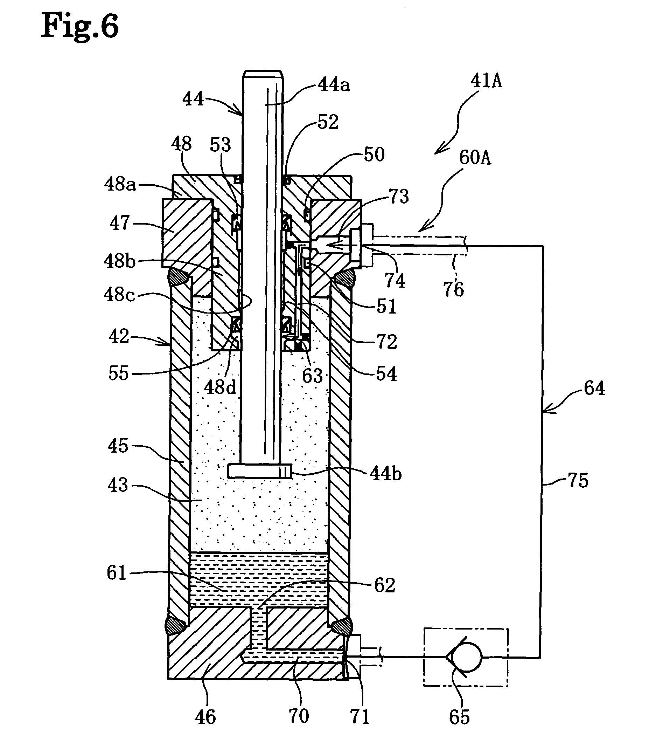

Fig. 6 is a vertical sectional view of a gas spring of Embodiment 6.
Fig. 7 is a vertical sectional view of a gas spring of Embodiment 7.
Fig. 8 is a vertical sectional view of a gas spring of Embodiment 8.

### DESCRIPTION OF NUMRERALS

- 1, 41, 41A ∼ 41C: gas spring
- 2, 2C, 42: cylinder body
- 3, 43: compressed gas
- 4, 44: rod member
- 5, 5C, 45: wall
- 6, 6C, 46: bottom wall
- 7, 48: rod-side end wall
- 13, 53, 55: sealing member
- 20, 20A ∼ 20C, 60, 60A ∼ 60C: lubricating structure
- 21, 21C, 61: lubricating oil
- 22, 22C, 62: lubricating oil inlet
- 23, 23C, 63: lubricating oil outlet
- 24, 24C, 64: lubricating oil passage
- 25, 26, 25C, 65, 66: check valve
- 31, 71: inlet-side port
- 33, 74: outlet-side port
- 35, 76: tubes (passage forming member)

### BEST MODE FOR IMPLEMENTING THE INVENTION

The invented lubrication structure for gas spring comprises a lubricating oil received in the lower end part in the cylinder body, a lubricating oil inlet formed in the lower end part of the cylinder body so that the lubricating oil can be introduced, a lubricating oil outlet formed in the upper end part of the cylinder body positioning on the vicinity of lower end of the rod-side end wall of cylinder body so that the lubricating oil can be injected, a lubricating oil passage connecting the lubricating oil inlet and the lubricating oil outlet and a check valve means provided in the lubricating oil passage and preventing a back flow of the lubricating oil from the lubricating oil outlet to the lubricating oil inlet, in a gas spring disposed with a rod member in a posture of protruding it upward from the rod-side end wall.

### EMBODIMENT 1

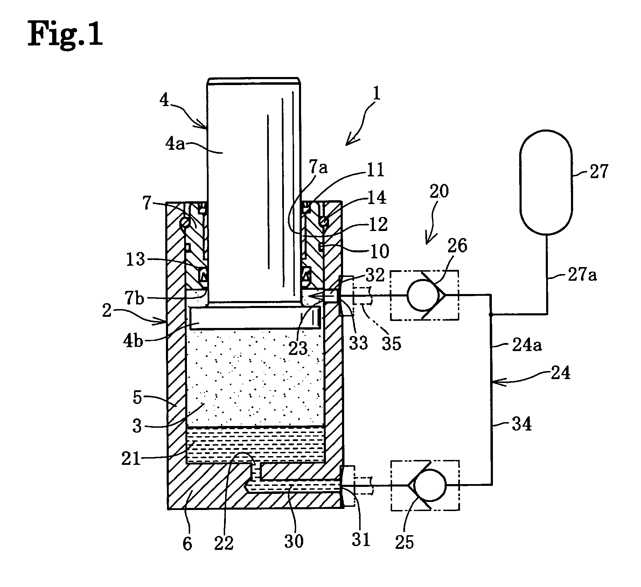

As shown in Fig. 1, the gas spring 1 has a cylinder body 2, a compressed gas 3 filled in this cylinder body 2, a rod member 4 inserted slidably into the rod-side end wall 7 of the cylinder body 2 and receiving a gas pressure of the compressed gas 3 and a sealing member 13 sealing a sliding part between the rod-side end wall 7 and the rod member 4, and the rod member 4 is disposed in a posture of protruding it from the rod-side end wall 7.

The cylinder body 2 has a cylindrical wall 5, a bottom wall 6 formed integrally with the wall 5 and a rod-side end wall 7, the rod-side end wall 7 is embedded in the upper part of wall 5 and fixed with a ring member 14 for locking. An annular sealing member 10 is mounted to the periphery of rod-side end wall 7, and a space between the wall 5 and the rod-side end wall 7 is sealed with this sealing member 10.

A rod-side insertion hole 7a is formed on the rod-side end wall 7 in the manner of passing through up and down, and the rod member 4 is slidably embedded in the rod-side insertion hole 7a. An annular dust seal 11, a cylindrical low-friction member 12 and an annular sealing member 13 are mounted to the inner periphery of the rod-side end wall 7 (rod-side insertion hole 7a) in order from the upper side to the lower side

The invasion of dust, etc. from the outside into the rod-side insertion hole 7a is prevented by the dust seal 11, and the rod member 4 is supported with the low-friction member 12 smoothly and movably up and down. The inside of cylinder body 2 is kept air-tight with the sealing members 10, 13, and the compressed gas 3 (e.g., compressed nitrogen gas 3) compressed to a prescribed pressure (e.g., about 10 ∼ 15 MPa) is filled into the cylinder body 2.

Most of the rod member 4 is formed by a rod body 4a which can be inserted through the rod-side insertion hole 7a, and flange part 4b with a diameter larger than that of the rod body 4a is formed at the lower end positioning in the cylinder body 2. A portion protruding from the rod-side end wall 7 into the cylinder body 2 in the rod member 4 becomes a pressure receiving part receiving the gas pressure of compressed gas 3, and the rod member 4 is energized upward with an energizing force as (cross-sectional area of rod body 4a) x (pressure of compressed gas 3).

The lubrication structure 20 for gas spring has a lubricating oil 21 received in the lower end part in the cylinder body 2, a lubricating oil inlet 22 formed in the lower end part of the cylinder body 2 so that the lubricating oil 21 can be introduced, a lubricating oil outlet 23 formed in the upper end part of the cylinder body 2 positioning on the vicinity of lower end of the rod-side end wall 7 of cylinder body 2 so that the lubricating oil 21 can be injected or discharged, a lubricating oil passage 24 connecting the lubricating oil inlet 22 and the lubricating oil outlet 23, a pair of check valves 25, 26 provided in series in the lubricating oil passage 24, and an accumulator 27 connected to a passage 24a between the pair of check valves 25, 26 in the lubricating oil passage 24.

The amount of lubricating oil 21 is preferably a proper amount which needs not be made up for a long time to some extent without impairing the function of gas spring 1 with this lubricating oil 21. The lubricating oil inlet 22 is formed on the upper surface portion of bottom wall 6 of the cylinder body 2, and the lubricating oil outlet 23 is formed on the inner surface portion of wall 5 of the cylinder body 2 so that it faces to a portion positioning just on the downside of rod-side end wall 7 in the rod member 4.

The lubricating oil passage 24 has a passage 30 formed in the bottom wall 6 and connected to the lubricating oil inlet 22, an inlet side port 31 communicated with the lubricating oil inlet 22 via the passage 30 and facing to the periphery of cylinder body 2, a passage 32 formed in the wall 5 and connected with the lubricating oil outlet 23, an outlet side port 33 communicated with the lubricating oil outlet 23 via the passage 32 and facing to the periphery of cylinder body 2, and a passage 34 outside the cylinder body 2 connecting the ports 31, 33. The passage 34 includes the passage 24a and consists of an elastomer tube 35 equivalent to a passage forming member, and both ends of this tube 35 are connected fluid-tightly with the ports 31, 33.

The pair of check valves 25, 26 prevent a back flow of lubricating oil from the lubricating oil outlet side to the lubricating oil inlet side, respectively, the check valve 25 is provided in a portion near to the lubricating oil inlet 22 in the lubricating oil passage 24, and the check valve 26 is provided in a portion near to the lubricating oil outlet 23 in the lubricating oil passage 24. Moreover, the check valves 25, 26 are preferably provided in the vicinity of the inlet side port 31 and outlet side port 33 in the passage 34 (tube 35).

The accumulator 27 is a comparatively small accumulator connected with the passage 24a of lubricating oil passage 24 via the passage 27a and capable of storing the lubricating oil 21 in a pressurized state corresponding to the pressure of compressed gas 3.

This lubricating structure 20 for gas spring is so constructed that the lubricating oil 21 is introduced from the lubricating oil inlet 22 to the lubricating oil passage 24 and the lubricating oil 21 is discharged or injected from the lubricating oil outlet 23 so that it can be supplied to the rod member 4 by utilizing a pressure change of the compressed gas 3 and a sliding part between the sealing member 13 and the rod member 4 can be lubricated with the lubricating oil 21 supplied and adhering to the rod member 4. A gap 7b is formed between the rod-side end wall 7 and the rod member 4 on the downside of sealing member 13 so that the lubricating oil 21 adhering to the rod member 4 reaches the sealing member 13 without being scraped at the lower end of rod-side end wall 7.

Here, the use of pressure change of the compressed gas 3 is described in detail, first, if the rod member 4 recedes into the cylinder body 2, the compressed gas 3 is pressurized and the pressure of this compressed gas 3 does not act on the passage 24a between the pair of check valves 25, 26 from the lubricating oil outlet 23 side in the lubricating oil passage 24, therefore the lubricating oil 21 in the cylinder body 2 is pressurized and introduced from the lubricating oil inlet 22 to the lubricating oil passage 24, and the lubricating oil 21 is kept in a pressurized state in the passage 24a and the accumulator 27. Subsequently, if the rod member 4 advances from the inside of cylinder body 2, the pressure of compressed gas 3 is depressurized and becomes lower than the pressure of lubricating oil 21 kept in the pressurized state in the passage 24a and the accumulator 27, therefore the lubricating oil 21 in the lubricating oil passage 24 is discharged or injected from the lubricating oil outlet 23.

According to the lubrication structure 20 for gas spring described above, it is so constructed the lubricating oil 21, lubricating oil inlet 22, lubricating oil outlet 23, lubricating oil passage 24, the pair of check valves 25, 26 and accumulator 27 are provided, the lubricating oil 21 is introduced from the lubricating oil inlet 22 to the lubricating oil passage 24 and the lubricating oil 21 is discharged from the lubricating oil outlet 23 to the rod member 4 by use of the pressure change of the compressed gas 3 so that it can be supplied.

Namely, a state of filling the lubricating oil 21 into at least the passage 24a in the lubricating oil passage 24 can be maintained by the pair of check valves 25, 26 without impairing the function of gas spring 1 by receiving a proper amount of lubricating oil 21 in the cylinder body 2, therefore the lubricating oil 21 can be reliably supplied to the rod member 4, the sliding part between the sealing member 13 and the rod member 4 can be reliably lubricated with the lubricating oil 21, thus the durability of sealing member 13 can be enhanced and the function of gas spring 1 can be continued for a long time.

In this case, a pressure change of compressed gas 3 can be generated by allowing the rod member 4 to recede into or advance from the cylinder body 2, therefore the lubricating function can be reliably displayed if necessary by a simple construction in which a driving machine, etc. for supply of lubricating oil 21 needs not to be provided separately.

The pair of check valves 25, 26 are provided in series in the lubricating oil passage 24 and the accumulator 27 connected to the passage 24a between the pair of check valves 25, 26 in the lubricating oil passage 24 is provided, therefore, when the rod member 4 recedes into the cylinder body 2 and the compressed gas 3 is pressurized, the lubricating oil 21 in the cylinder body 2 can be reliably introduced from the lubricating oil inlet 22 into the lubricating oil passage 24 and a proper amount of lubricating oil 21 can be reliably kept in a pressurized state in the passage 24a and the accumulator 27; when the rod member 4 advances from the cylinder body 2 and the compressed gas is depressurized, a proper amount of lubricating oil 21 in the lubricating oil passage 24 can be reliably discharged from the lubricating oil outlet 23 by the lubricating oil 21 in the pressurized state kept in the passage 24a and the accumulator 27.

The check valve 25 is provided in a portion near to the lubricating oil inlet 22 in the lubricating oil passage 24 and the check valve 26 is provided in a portion near to the lubricating oil outlet 23 in the lubricating oil passage 24, therefore a state of filling the lubricating oil 21 in most of the inside of lubricating oil passage 24 can be maintained, when the compressed gas 3 is pressurized, the lubricating oil 21 can be kept in the pressurized state; therefore, when the compressed gas 3 is depressurized, the lubricating oil 21 in the lubricating oil passage 24 can be reliably discharged or injected from the lubricating oil outlet 23.

The lubricating oil passage 24 has an inlet side port 31 communicated with the lubricating oil inlet 22 and facing to the periphery of cylinder body 2, an outlet side port 33 communicated with the lubricating oil outlet 23 and facing to the periphery of cylinder body 2, and a tube 35 connecting these two ports 31, 33, therefore, the lubricating structure 20 can be constructed by a simple structure in which the tube 35 is mounted by connecting it with the two ports 31, 33, thus the application of the existent gas spring 1 is facilitated.

The lubricating oil inlet 22 is formed on the upper surface of bottom wall 6 of the cylinder body 2, therefore the lubricating oil 21 received in the lower end part in the cylinder body 2 can be reliably introduced from the lubricating oil inlet 22 into the lubricating oil passage 24, and the lubricating oil outlet 23 is formed on the inner surface of wall 5 of the cylinder body 2 so that it faces to a portion positioning on the downside of rod-side end wall 7 in the rod member 4, therefore the lubricating oil 21 discharged from the lubricating oil outlet 23 can be reliably supplied to the rod member 4 in the vicinity of sealing member 13, thus the sliding par between the sealing member 13 and the rod member 4 can be reliably lubricated with the lubricating oil 21. Moreover, a metal tube member may also be applied in place of the elastomer tube 35.

### EMBODIMENT 2

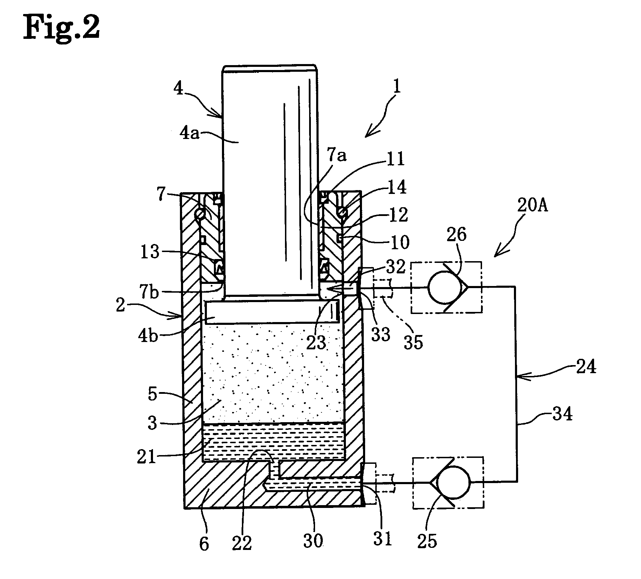

As shown in Fig. 2, the accumulator 27 in the lubricating structure 20 for gas spring of Embodiment 1 is omitted in the lubricating structure 20A for gas spring of Embodiment 2. According to this lubricating structure 20A, when the rod member 4 recedes into the cylinder body 2 and the compressed gas 3 is pressurized, the lubricating oil 21 in the cylinder body 2 is reliably introduced from the lubricating oil inlet 22 into the lubricating oil passage 24 and the lubricating oil 21 is kept in a slightly compressed and pressurized state; when the rod member 4 advances from the cylinder body 2 and the compressed gas 3 is depressurized, the lubricating oil 21 in the lubricating oil passage 24 can be reliably discharged or injected from the lubricating oil outlet 23 with the lubricating oil 21 in the pressurized state kept in the passage 24a.

Here, an elastomer tube 35 is preferably applied as the tube 35, but other passage forming members (e.g., metal tube member) are also applicable. When the compressed gas 3 is pressurized while using the an elastomer tube 35, the lubricating oil 21 in the cylinder body 2 can be is reliably introduced from the lubricating oil inlet 22 into the lubricating oil passage 24 by pressurizing it while expanding the tube 35, thus a proper amount of lubricating oil 21 can be reliably kept in the passage 24a in the pressurized state.

### EMBODIMENT 3

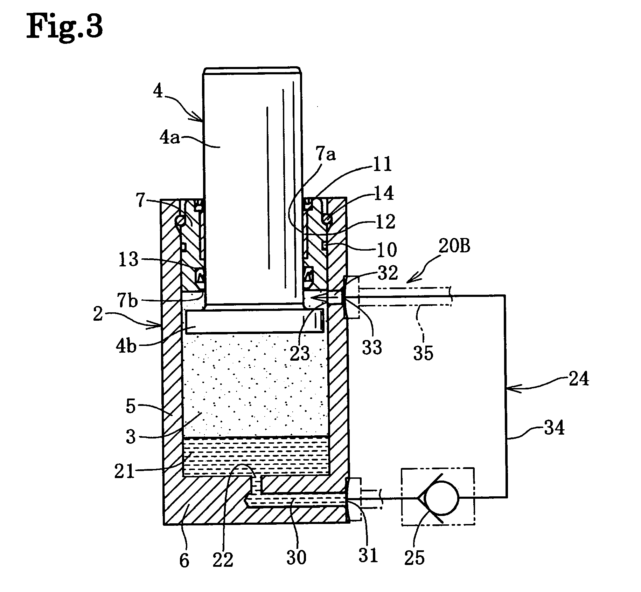

As shown in Fig. 3, the check valve 26 in the lubricating structure 20A for gas spring of Embodiment 2 is omitted in the lubricating structure 20B for gas spring of Embodiment 3, and it is so constructed that the lubricating oil 21 is introduced from the lubricating oil inlet 22 and the lubricating oil 21 is discharged from the lubricating oil outlet 23 so that it can be supplied to the rod member 4 by a differential pressure between the pressure of compressed gas 3 near to the lubricating oil inlet 22 and the pressure of compressed gas 3 near to the lubricating oil outlet 23.

In this case, it is so constructed that a surge pressure generated when the rod member 4 suddenly recedes into the cylinder body 2 is acted on the lubricating oil 21 to generate the differential pressure. For these surge pressure and differential pressure, for example, if the gas pressure of compressed gas 3 rises from P1 to 1.5 times as a whole, it is expected that a surge pressure of 2.0 x P1 or more generates and a differential pressure of P1 or more generates. When enough differential pressure is obtained by ordinary operations of the gas spring 1, there is no problem. However, when the pressure is not obtained by ordinary operation of the gas spring 1, the gas spring 1 may be operated at appropriate intervals so that the rod member 4 is allowed to suddenly recede into the cylinder body 2.

According to the lubricating structure 20B of this gas spring, the surge pressure generated when the rod member 4 suddenly recedes into the cylinder body 2 is acted on the lubricating oil 21 to generate the differential pressure between the pressure of compressed gas 3 near to the lubricating oil inlet 22 and the pressure of compressed gas 3 near to the lubricating oil outlet 23, thus the lubricating oil 21 can be introduced from the lubricating oil inlet 22, the lubricating oil 21 can be discharged or injected from the lubricating oil outlet 23 and the lubricating oil 21 can be supplied to the rod member 4 by this differential pressure.

Moreover, the check valve 25 for preventing the back flow of lubricating oil 21 from the lubricating oil outlet side to the lubricating oil inlet side is provided in a portion nearer to the lubricating oil inlet 22 than the lubricating oil outlet 23 in the lubricating oil passage 24, therefore, the lubricating oil 21 can be kept in the portion on further lubricating oil outlet side than the check valve 25 in the lubricating oil passage 24 even in a state that no differential pressure generates, the amount of lubricating oil 21 that can be kept in the lubricating oil passage 24 can be increased by providing the check valve 25 in a portion nearer to the lubricating oil inlet 22 than the lubricating oil outlet 23 in the lubricating oil passage 24, accordingly, if the differential pressure is generated, the lubricating oil 21 can be reliably discharged from the lubricating oil outlet 23 by introducing a small amount of lubricating oil 21 from the lubricating oil inlet 22.

### EMBODIMENT 4

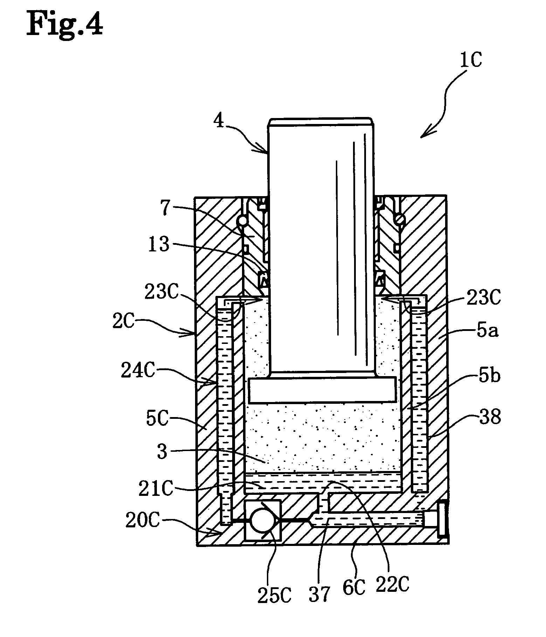

As shown in Fig. 4, a gas spring 1C of Embodiment 4 is obtained by changing the cylinder body 2 in the gas spring 1 of Embodiment 1. In this gas spring 1C, the cylinder body 2C has a wall 5C and a bottom wall 6C with diameters larger than those of the wall 5 and bottom wall 6 of Embodiment 1 and a rod-side end wall 7 same as that of Embodiment 1. The wall 5C has a periphery wall 5a and an inner wall 5b in the lower portion than an upper end side portion embedded with the rod-side end wall 7.

The lubricating structure 20C for gas spring of Embodiment 4 is obtained by changing the lubricating structure 20B for gas spring of Embodiment 3, and it has a lubricating oil 21C received in a portion on the lower end side in the cylinder body 2C, a lubricating oil inlet 22C formed in a portion on the lower end side in the cylinder body 2C so that the lubricating oil 21C can be introduced, plural lubricating oil outlets 23C formed in a portion on the upper end side of the cylinder body 2C and positioning on the vicinity of lower end of the rod-side end wall 7 of cylinder body 2C so that the lubricating oil 21C can be discharged, a lubricating oil passage 24C connecting the lubricating oil inlet 22C and the lubricating oil outlets 23C, and a check valve 25C provided in the lubricating oil passage 24C.

The lubricating oil inlet 22C is formed on the upper surface portion of bottom wall 6C of the cylinder body 2C, and plural lubricating oil outlets 23C formed in a portion on the inner surface of wall 5C (inner wall 5b) of the cylinder body 2C so that they face to a portion positioning just on the downside of rod-side end wall 7 in the rod member 4. The lubricating oil passage 24C has a passage 37 formed at the bottom wall 6C and connected to the lubricating oil inlet 22C and a passage 38 formed at the wall 5C and connected to the lubricating oil outlets 23C. The passage 38 is annularly formed between the periphery wall 5a and an inner wall 5b of the wall 5C.

The check valve 25C is provided so as to prevent the back flow of lubricating oil 21C from the lubricating oil outlets 23C to the lubricating oil inlet 22C in a portion nearer to the lubricating oil inlet 22C than the lubricating oil outlets 23C in the lubricating oil passage 24C and, in more detail, it is provided in the passage 37 formed in the bottom wall 6C .

According to this lubricating structure 20C for gas spring, the whole lubricating oil passage 24C is formed in the cylinder body 2C, therefore, like Embodiment 3, the tube 35 outside the cylinder body 2 can be omitted, thus damage of the lubricating oil passage 24C can be reliably prevented and the appearance structure can be simplified. It takes the same function and effect as the lubricating structure 20B for gas spring of Embodiment 3.

### EMBODIMENT 5

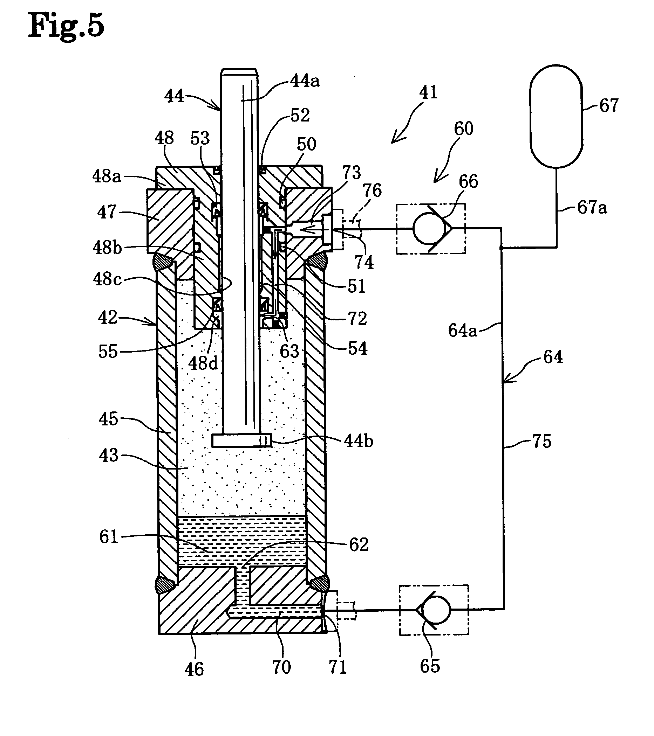

As shown in Fig. 5, a gas spring 41 of Embodiment 5 has a cylinder body 42, a compressed gas 43 filled in this cylinder body 42, a rod member 44 inserted slidably into the rod-side end wall 48 of the cylinder body 42 and receiving a gas pressure of the compressed gas 43 and a pair of sealing members 53, 55 sealing the sliding part between the rod-side end wall 48 and the rod member 44, and the rod member 4 is arranged in a posture of protruding it from the rod-side end wall 48 and has a bigger forward/backward stroke than the gas spring 1 of Embodiment 1.

The cylinder body 42 has a cylindrical wall 45, a bottom wall 46, a cylindrical member 47 and a rod-side end wall 48, the lower end of the cylindrical wall 45 is fitted to the upper end of bottom wall 46 and welded, the lower end of cylindrical member 47 is embedded to the upper end of wall 45 and welded, and its cylindrical part 48b is embedded into the cylindrical member 47 in a state that a flange 48a of the rod-side end wall 48 is in touch with the upper surface of cylindrical member 47, fixed and protrudes downward from the cylindrical member 47. A pair of upper and lower annular sealing members 50, 51 are mounted to the periphery of rod-side end wall 48, and a space between the cylindrical member 47 and the rod-side end wall 48 is sealed by these sealing members 50, 51.

The rod insertion hole 48c formed at the rod-side end wall 48 in the shape of passing through up and down, and the rod member 44 is embedded slidably into this rod insertion hole 48c. An annular dust seal 52, an annular seal member 53, a cylindrical low-friction member 54 and an annular seal member 55 are mounted to the inner periphery of the rod insertion hole 48c of rod-side end wall 48 in order from the upper side to the lower side. The inside of cylinder body 42 is kept air-tight by the seal member 50, 51, 53, 55, and a compressed gas 43 compressed to a prescribed pressure is filled in this cylinder body 42.

The rod member 44 is formed in a rod body 44a which can be inserted through the rod insertion hole 48c, and a flange part 44b with a diameter larger than that of the rod body 44a is formed at the lower end positioning in the cylinder body 42. A portion protruding from the rod-side end wall 48 into the cylinder body 2 in the rod member 44 becomes a pressure receiving part receiving the gas pressure of compressed gas 3.

The lubricating structure 60 for gas spring of Embodiment 5 has a lubricating oil 61 received in a portion on the lower end side in the cylinder body 42, a lubricating oil inlet 62 formed in a portion on the lower end side of the cylinder body 42 so that the lubricating oil 61 can be introduced, a lubricating oil outlet 63 formed in a portion on the upper end side of the cylinder body 42 and positioning on the upper side than the vicinity of lower end of the rod-side end wall 48 of cylinder body 42 so that the lubricating oil 61 can be discharged, a lubricating oil passage 64 connecting the lubricating oil inlet 62 and the lubricating oil outlets 63, a pair of check valves 65, 66 provided in series in the lubricating oil passage 64, and an accumulator 67 connected to a passage 64a between the pair of check valves 65, 66 in the lubricating oil passage 64.

The lubricating oil inlet 62 is formed on the upper surface of bottom wall 46 of the cylinder body 42, and the lubricating oil outlet 63 formed in a portion on the inner surface of rod-side end wall 48 so that it faces to a portion positioning in the vicinity of lower sealing member 55 (just below the sealing member 55) in the rod member 44.

The lubricating oil passage 64 has a passage 70 formed in the bottom wall 46 and connected to the lubricating oil inlet 62, an inlet side port 71 communicating with the lubricating oil inlet 62 via the passage 70 and facing the periphery of cylinder body 42, a passage 72 connected to the lubricating oil outlet 63, a passage 73 formed in the cylindrical member 47 and connected to the passage 72, an outlet side port 74 communicating with the lubricating oil outlet 63 via the passages 72, 73 and facing the periphery of cylinder body 42, and a passage 75 outside the cylinder body 42 connecting the ports 71, 74. The passage 75 consists of an elastomer tube 76 equivalent to a passage forming member, and both ends of this tube 76 are connected fluid-tightly to the ports 71, 74.

The pair of check valves 65, 66 prevent a back flow of lubricating oil from the lubricating oil outlet side to the lubricating oil inlet side, respectively, the check valve 65 is provided in a portion near to the lubricating oil inlet 62 in the lubricating oil passage 64 and the check valve 66 is provided in a portion near to the lubricating oil outlet 63 in the lubricating oil passage 64. The accumulator 67 is a comparatively small accumulator connected to the passage 64a of the lubricating oil passage 64 and capable of storing the lubricating oil 61 in a pressurized state corresponding to the pressure of compressed gas 43.

This lubricating structure 60 for gas spring is so constructed that the lubricating oil 61 is introduced from the lubricating oil inlet 62 into the lubricating oil passage 64 and the lubricating oil 61 is discharged or injected from the lubricating oil outlet 63 by use a pressure change of compressed gas 43 so that it can be supplied to the rod member 44, a sliding part between the sealing member 55 and the rod member 44 is constructed in a manner capable of lubrication with the adhering lubricating oil 61 supplied to the rod member 44, and the operation is same as the lubricating structure 20 for gas spring of Embodiment 1. Moreover, a gap 48d between the rod-side end wall 48 and the rod member 44 is formed below the sealing member 55 so that the lubricating oil 61 adhering to the rod member 44 reaches the sealing member 55 without being scraped by the rod-side end wall 48.

According to this lubricating structure 60 for gas spring, the lubricating oil outlet 63 is formed on the inner surface of rod-side end wall 48 so that it faces to a portion positioning in the vicinity of lower sealing member 55 in the rod member 44, therefore the lubricating oil 61 discharged from the lubricating oil outlet 63 can be reliably supplied to the rod member 44 in the vicinity of sealing member 55, thus the lubricating oil 61 can be directly supplied to the sealing member 55, and the space between the sealing member 55 and the rod member 44 can be reliably lubricated with this lubricating oil 61.

Since the rod member 44 had a big forward/backward stroke and the cylinder body 42 also became long, there was such a problem that a lubricating oil could not be reliably supplied to the rod member and the space between the sealing member and the rod member could not be reliably lubricated even if a proper amount of lubricating oil was received in the cylinder body before, but it can be improved in this embodiment. Besides, it takes the same effect and function as Embodiment 1. Moreover, the accumulator 67 may also be omitted like Embodiment 2.

### EMBODIMENT 6

The lubricating structure 60A for gas spring of Embodiment 6 is so constructed that the check valve 66 and the accumulator 67 in the lubricating structure 60 for gas spring of Embodiment 5 are omitted, the lubricating oil 61 is introduced from the lubricating oil inlet 62 and the lubricating oil 61 is discharged from the lubricating oil outlet 63 so that it can be supplied to the rod member 44 due to a differential pressure between the pressure of compressed gas 43 in the vicinity of lubricating oil inlet 62 and the pressure of compressed gas 43 in the vicinity of lubricating oil outlet 63. In this case, it is so constructed that a surge pressure generating when the rod member 44 suddenly recedes into the cylinder body 42 is acted on the lubricating oil 61 to generate the differential pressure. This structure takes same function and effect as Embodiment 3.

### EMBODIMENT 7

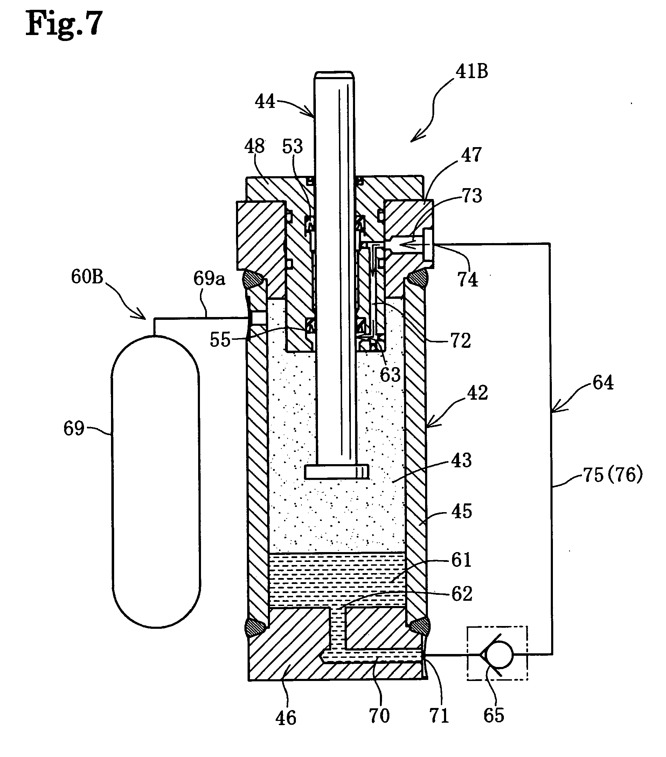

As shown in Fig. 7, a lubricating structure 60B for gas spring of Embodiment 7 additionally has the accumulator 69 in the lubricating structure 60A for gas spring of Embodiment 6. The accumulator 69 is provided outside the cylinder body 42, connected to the upper end part of cylinder body 42 with a gas passage 69a (a tube 69a, etc.), the inside of cylinder body 42 and the inside of accumulator 69 are communicated.

According to this lubricating structure 60B for gas spring, when the rod member 44 suddenly recedes into the cylinder body 42, the pressure of compressed gas 43 rises and the surge pressure generates, however, the compressed gas 43 is introduced into the accumulator 69, the pressure rise of compressed gas 43 is relaxed by this the accumulator 69, and the differential pressure between the pressure of compressed gas 43 in the vicinity of lubricating oil inlet 62 and the pressure of compressed gas 43 in the vicinity of lubricating oil outlet 63 is increased, thus it can be expected that the lubricating oil 61 is reliably supplied to the rod member 44.

### EMBODIMENT 8

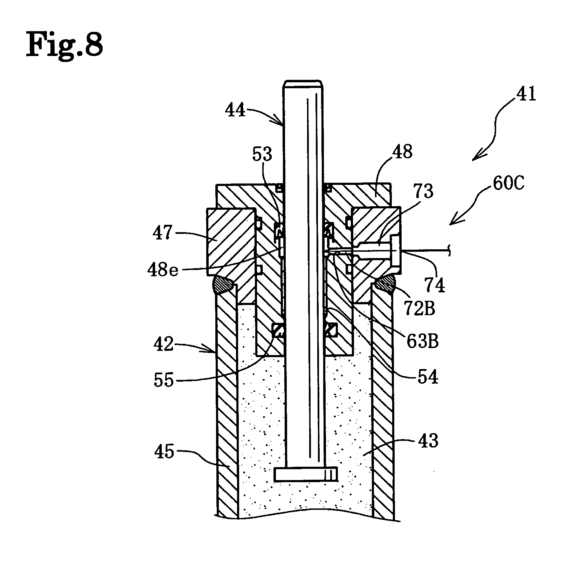

As shown in Fig. 8, a lubricating structure 60C for gas spring of Embodiment 4 is obtained by changing the lubricating oil outlet 63 and the lubricating oil passage 64 in the lubricating structures 60, 60A, 60B for gas spring of Embodiment 5 ∼ 7. In this lubricating structure 60C for gas spring, the lubricating oil outlet 63B is formed on the inner surface of rod-side end wall 48 so that it faces to a portion positioning in the vicinity of upper sealing member 53 (near to the downside of sealing member 53) in the rod member 44. Moreover, a gap 48e between the rod-side end wall 48 and the rod member 44 is formed below the sealing member 53 so that the lubricating oil 61 adhering to the rod member 44 reaches the sealing member 53 without being scraped by the rod-side end wall 48.

According to this lubricating structure 60C for gas spring, a space between the upper sealing member 53 and the rod member 44 can be reliably lubricated with the lubricating oil 61 and the lubricating oil 61 can also be supplied to the low-friction member 54, therefore the friction between the low-friction member 54 and the rod member 44 can also be further reduced, thus their wear resistance can be enhanced. Besides, this structure takes the same function and effect as Embodiment 5 ∼ 7.

The present invention may also be constructed by combining any of Embodiment 5 ∼ 7 and Embodiment 8 so that the lubricating oil 61 can be supplied to both of the pair of upper and lower sealing members 53, 55. In Embodiment 1 ∼ 4, the lubricating oil discharged from the lubricating oil outlet may also be directly supplied to the sealing member. The invented lubrication structure for gas spring is also applicable to such a gas spring that a rod member protrudes from the cylinder body to both the upper and lower sides, the same function and effect as above are also obtained in this case.

### INDUSTRIAL APPLICABILITY

The invented lubrication structure for gas spring can be adopted in gas springs for various purposes of various devices, such as main shaft balancer of machine tools or cushioning device of pressing machines, etc., it is particularly suitable in a case wherein a rod member is arranged in a posture of protruding it upward from a rod-side end wall.

## Claims

1. A lubrication structure for gas spring comprising a cylinder body, a compressed gas filled in the cylinder body, a rod member inserted slidably into a rod-side end wall and receiving a gas pressure of the compressed gas and a sealing member sealing a sliding part between the rod-side end wall and the rod member and disposed with the rod member in a posture of protruding it upward from the rod-side end wall; wherein said lubrication structure comprises,
a lubricating oil received in a lower end part in the cylinder body,
a lubricating oil inlet formed in the lower end part of the cylinder body so that the lubricating oil can be introduced,
a lubricating oil outlet formed in an upper end part of the cylinder body positioning on a vicinity of a lower end of the rod-side end wall of cylinder body so that the lubricating oil can be injected,
a lubricating oil passage connecting the lubricating oil inlet and the lubricating oil outlet, and
a check valve means provided in the lubricating oil passage and preventing a back flow of the lubricating oil from the lubricating oil outlet to the lubricating oil inlet,
said lubrication structure being so constructed that the lubricating oil is
introduced from the lubricating oil inlet to the lubricating oil passage and the lubricating oil is injected from the lubricating oil outlet by utilizing a pressure change in the compressed gas so that the lubricating oil can be supplied to the rod member and the sealing member.

2. The lubrication structure for gas spring according to claim 1, wherein a pair of check valves are provided in series as the check valve means in the lubricating oil passage.

3. The lubrication structure for gas spring according to claim 2, wherein an accumulator connected to a passage portion between the pair of check valves is provided.

4. The lubrication structure for gas spring according to claim 2, wherein one of the pair of check valves is provided in a portion near to the lubricating oil inlet in the lubricating oil passage and the other of the pair of check valves is provided in a portion near to the lubricating oil outlet in the lubricating oil passage.

5. The lubrication structure for gas spring according to claim 1, wherein the lubricating oil is introduced from the lubricating oil inlet and injecting the lubricating oil from the lubricating oil outlet, due to a differential pressure between a pressure of compressed gas near to the lubricating oil inlet and a pressure of compressed gas near to the lubricating oil outlet.

6. The lubrication structure for gas spring according to claim 5, wherein the differential pressure is generated by a surge pressure generated when the rod member suddenly recedes into the cylinder body.

7. The lubrication structure for gas spring according to claim 6, wherein the check valve means is provided at a portion nearer to the lubricating oil inlet than the lubricating oil outlet in the lubricating oil passage.

8. The lubrication structure for gas spring according to any of claims 1 ∼ 7, wherein the lubricating oil passage has an inlet side port communicating with the lubricating oil inlet and facing the periphery of cylinder body, an outlet side port communicating with the lubricating oil outlet and facing the periphery of cylinder body and a passage forming member connecting these two ports.

9. The lubrication structure for gas spring according to claim 8, wherein the passage forming member comprises an elastomer tube.

10. The lubrication structure for gas spring according to any of claims 1 ∼ 7, wherein the lubricating oil inlet is formed on an upper surface portion of bottom wall of the cylinder body.

11. The lubrication structure for gas spring according to any of claims 1 ∼ 7, wherein the lubricating oil outlet is formed on an inner surface portion of wall of the cylinder body so that it faces a portion positioning on a lower side of the rod-side end wall in the rod member.

12. The lubrication structure for gas spring according to any of claims 1 ∼ 7, wherein the lubricating oil outlet is formed on the inner surface portion of the rod-side end wall so that it faces a portion positioning in a vicinity of a sealing member in the rod member.
